# EUROPÄISCHE PATENTSCHRIFT

(11) **EP 3 170 601 B1**
(45) Veröffentlichungstag und Bekanntmachung des Hinweises auf die Patenterteilung: **04.04.2018**
(21) Anmeldenummer: 15195387.4
(22) Anmeldetag: 19.11.2015
(51) Int. Cl.: B23G 5/00, B23G 5/06, B22F 3/105, B23P 15/52, B23G 7/02, B23P 15/32, B23P 15/50

(54) **GEWINDEFORMER ODER -BOHRER UND VERFAHREN ZUR HERSTELLUNG EINES GEWINDEFORMERS ODER -BOHRERS**
THREAD FORMER OR TAP AND METHOD FOR PRODUCING A THREAD FORMER OR TAP
DISPOSITIF DE MOULAGE OU DE TARAUDAGE DE FILETS ET PROCÉDÉ DE FABRICATION D'UN DISPOSITIF DE MOULAGE OU DE TARAUDAGE DE FILETS

(43) Veröffentlichungstag der Anmeldung: 24.05.2017
(73) Patentinhaber: LMT Fette Werkzeugtechnik GmbH & Co. KG, 21493 Schwarzenbek (DE)
(72) Erfinder: VON GARREL, Christian, 22844 Norderstedt (DE); IMMICH, Philipp, 24576 Bramstedt (DE); KRETZSCHMANN, Uwe, 21493 Schwartzenbek (DE); SCHUNK, Uwe, 23554 Lübeck (DE)
(74) Vertreter: Hauck Patentanwaltspartnerschaft mbB

(56) Entgegenhaltungen:
- DE-A1-102014 208 134
- DE-U1- 8 901 178
- US-A1- 2014 087 210
- US-A1- 2014 105 697
- US-A1- 2014 321 931
- US-A1- 2015 298 220
- US-A1- 2015 298 221

## Beschreibung

Die Erfindung betrifft einen Gewindeformer oder -bohrer gemäß dem Oberbegriff des Anspruchs 1, umfassend einen Schaftkörper, der an seinem einen Ende einen Einspannabschnitt und an seinem anderen Ende einen Halteabschnitt aufweist, weiter umfassend einen separat von dem Schaftkörper ausgebildeten Profilkörper mit Gewindedrückkanten oder Gewindeschneiden zum Formen oder Schneiden eines Gewindes an einem Werkstück, wobei der Profilkörper an seinem einen Ende einen Anschlussabschnitt aufweist, mit dem der Profilkörper an dem Halteabschnitt des Schaftkörpers befestigbar ist. Die Erfindung betrifft außerdem ein Verfahren zur Herstellung eines solchen Gewindeformers oder -bohrers.

Aus EP 1 409 185 B2 ist ein Gewindeformer oder -bohrer bekannt, bei dem ein Profilkörper an einem separat ausgebildeten Schaft zentrisch und unverdrehbar befestigbar ist. Vorteilhaft bei einem solchen Gewindeformer oder -bohrer ist unter anderem, dass der Profilkörper aus einem härteren Material hergestellt werden kann als der Schaft. Für eine effektive Kühlung im Betrieb, jedoch auch zum Abführen von Spänen bei einer zerspanenden Bearbeitung, ist es bekannt, in den Profilkörper von außen Bohrungen einzubringen, über die ein Kühlmittel, beispielsweise ein Wasser-Öl-Gemisch, im Bereich der Gewindedrückkanten oder Gewindeschneiden ausgebracht wird. Allerdings besteht hinsichtlich der damit erzeugbaren Bohrungsgeometrien nur eine geringe Flexibilität. Außerdem ist der Übergang zwischen dem Schaftkörper und dem separat ausgebildeten Profilkörper für das Kühlmittel schwierig und schlecht abzudichten.

Aus DE 89 01 178 U1 ist ein einstückiger Gewindebohrer bekannt, bestehend aus einem Schaft und einem Gewindeteil, die einen zentralen, axial verlaufenden Kanal zum Durchleiten von Schmier- und Kühlflüssigkeit aufweisen.

Aus US 2014/0105697 A1 ist ein Gewindebohrer gemäß dem Oberbegriff des Anspruchs 1 bekannt. Aus US 2015/0298221 A1 ist ein zweiteiliges Werkzeug bekannt, wobei mindestens ein Kühlkanal ein gekrümmt sich umgekehrendes Segment aufweisen kann, so dass zwei Kanalsegmente in entgegengesetzten Richtungen orientiert sind. Die Kühlstruktur kann durch ein 3D-Druckverfahren erzeugt werden.

Weitere Werkzeuge mit Kühlleitungen, wobei die Werkzeuge teilweise mittels eines 3D-Druckverfahrens hergestellt werden können, sind bekannt aus US 2014/0321931 A1, US 2015/0298220 A1 und DE 10 2014 208 134 A1. Aus US 2014/0087210 A1 ist darüber hinaus die Herstellung von Schneid- oder Formwerkzeugen in Sinterverfahren bekannt.

Ausgehend von dem erläuterten Stand der Technik liegt der Erfindung die Aufgabe zugrunde, einen Gewindeformer oder -bohrer sowie ein Verfahren der eingangs genannten Art bereitzustellen, mit denen eine flexible und betriebssichere Versorgung und Ausbringung eines Kühlmittels möglich ist.

Die Erfindung löst die Aufgabe durch die unabhängigen Ansprüche 1 und 12. Vorteilhafte Ausgestaltungen finden sich in den abhängigen Ansprüchen, der Beschreibung und den Figuren.

Für einen Gewindeformer oder -bohrer der eingangs genannten Art löst die Erfindung die Aufgabe dadurch, dass der Profilkörper und der Schaftkörper schichtweise in einem 3D-Druckverfahren aufgebaut worden ist, wobei innerhalb des Profilkörpers eine bei an dem Schaftkörper befestigtem Profilkörper mit einer innerhalb des Schaftkörpers ausgebildeten Kühlmittelversorgungsleitung fluchtende Kühlmittelzuführleitung ausgebildet ist, die mit mehreren innerhalb des Profilkörpers ausgebildeten Kühlmittelverteilleitungen verbunden ist, wobei die Kühlmittelverteilleitungen jeweils eine zielgerichtete Austrittsöffnung im Bereich der Gewindedrückkanten oder Gewindeschneiden besitzen. Die Austrittsöffnungen können zwischen benachbarten Gewindeschneiden, insbesondere in den Spannuten, bzw. zwischen benachbarten Gewindedrückkanten, insbesondere in den Schmiernuten, vorgesehen sein.

Mit Gewindeformern oder -bohrern können beispielsweise Innengewinde in einem Werkstück erzeugt werden. Der erfindungsgemäße Gewindeformer oder -bohrer ist zum Ausbilden eines Innengewindes in einem Werkstück vorgesehen. Gewindebohrer gehen von einer bolzenförmigen Grundform aus, wobei durch das Einbringen von insbesondere achsparallelen oder schrägen Spannuten Schneiden in der Umfangsfläche des Profilkörpers erzeugt werden, die in dem Werkstück spanend ein Gewinde erzeugen. Gewindeformer zur Herstellung von Innengewinden werden geometrisch ebenfalls von einem Bolzen hergeleitet. Sie erzeugen das Gewinde in dem Werkstück allerdings nicht durch Zerspanung, sondern nur durch Verdrängung des Werkstoffs. Dazu werden in die Umfangsfläche des Profilkörpers Drückkanten eingebracht, die im Zuge der Bearbeitung das gewünschte Gewinde in dem Werkstück erzeugen. Die Drückkanten können ein polygonförmiges Gewindeprofil bilden. Der Schaftkörper weist einen Einspannabschnitt auf, mit dem er in eine entsprechende Werkzeugmaschine zum rotierenden Antreiben und gegebenenfalls Vorschieben eingespannt wird.

Erfindungsgemäß wird die dreidimensionale Drucktechnik (3D-Drucktrechnik) genutzt, um den Profilkörper des Gewindeformers oder -bohrers herzustellen und dabei eine innerhalb des Schaftkörpers ausgebildete Kühlmittelversorgungsleitung zu erzeugen, die mit mehreren ebenfalls innerhalb des Profilkörpers ausgebildeten Kühlmittelverteilleitungen verbunden ist. Die Kühlmittelverteilleitungen besitzen jeweils eine Austrittsöffnung im Bereich der Gewindedrückkanten oder Gewindeschneiden. Außerdem ist innerhalb des Schaftkörpers eine Kühlmittelversorgungsleitung ausgebildet, die bei miteinander verbundenem Schaftkörper und Profilkörper mit der Kühlmittelzuführleitung des Profilkörpers fluchtet. Die Kühlmittelleitungen des erfindungsgemäßen Gewindeformers oder - bohrers dienen in an sich bekannter Weise zum Führen eines Kühlmittels, insbesondere eines Kühlfluids, wie Wasser und/oder Öl. Mit Hilfe der 3D-Drucktechnik können Kühlmittelleitungsgeometrien erzeugt werden, die mit konventionellen Herstellungsverfahren, insbesondere Bohrverfahren, nicht realisierbar sind. Außerdem können die Kühlmittelleitungen in dem Profilkörper und in dem Schaftkörper mittels 3D-Drucktechnik hochpräzise erzeugt werden, so dass auch die Kühlmittelübergabe im Bereich des Anschlusses des Schaftkörpers an den Profilkörper in betriebssicherer Weise erfolgen kann. Die Erfindung ermöglicht gekrümmte und andere Verläufe der Kühlmittelleitungen, angepasst an die besonderen konstruktiven Bedingungen und die Anforderungen an das Kühlmittel im Betrieb, die im Stand der Technik nicht möglich sind. An der Umfangsfläche des Profilkörpers sind Schneiden oder Drückkanten zur Herstellung des gewünschten Gewindes an einem Werkstück vorgesehen. Diese können nachfolgend zu dem 3D-Druckverfahren beispielsweise durch Schleifen in den Profilkörper eingebracht worden sein. Das 3D-Druckverfahren kann also einen Profilkörperrohling erzeugen, in den anschließend die Schneiden oder Drückkanten eingearbeitet werden.

Der Profilkörper ist erfindungsgemäß als separates Profilelement ausgebildet und wird mittels geeigneter Befestigungsmittel drehfest und insbesondere zentrisch und lösbar am Schaftkörper befestigt. Zur Befestigung kommt beispielsweise eine Schraubverbindung in Frage, wie unten näher erläutert. Der Schaftkörper kann zylindrisch sein. Der Profilkörper kann ebenfalls eine zylindrische Grundform besitzen. Der Profilkörper kann an seinem dem Schaftkörper abgewandten Ende einen Anlauf- oder Anschnittbereich besitzen, an den sich in Richtung des Schaftkörpers ein Führungsabschnitt anschließt, an den sich wiederum der mit dem Schaftkörper verbundene Anschlussabschnitt anschließt. Der Profilkörper kann sich beispielsweise im Anlauf- oder Anschnittbereich in Richtung seines von dem Schaftkörper abgewandten freien Endes konisch verjüngen.

Erfindungsgemäß können insbesondere nur eine Kühlmittelversorgungsleitung und nur eine Kühlmittelzuführleitung vorgesehen sein. Diese eine Kühlmittelzuführleitung verzweigt dann in unterschiedliche Kühlmittelverteilleitungen, die das Kühlmittel an unterschiedlichen geeigneten Stellen der Umfangsfläche des Profilkörpers ausbringen. Durch das Vorsehen nur einer Kühlmittelversorgungsleitung und nur einer Kühlmittelzuführleitung erfolgt eine minimale Schwächung des Profilkörpers und des Schaftkörpers.

Auch der Schaftkörper ist schichtweise in einem 3D-Druckverfahern aufgebaut worden. Damit sind auch der Schaftkörper und insbesondere die Kühlmittelversorgungsleitung mit größtmöglicher Flexibilität herstellbar.

Wie bereits erläutert, kann der Profilkörper durch eine Schraubverbindung an dem Schaftkörper befestigt werden. Beispielsweise kann der Profilkörper mittels eines axial durch den Profilkörper in den Schaftkörper einschraubbaren Schraubenbolzens an dem Schaftkörper befestigbar sein.

Nach einer weiteren Ausgestaltung kann vorgesehen sein, dass der Anschlussabschnitt des Profilkörpers Formschlusselemente aufweist, die im an dem Schaftkörper befestigten Zustand in korrespondierende Formschlusselemente des Halteabschnitts des Schaftkörpers derart eingreifen, dass der Profilkörper nur in einer eindeutig definierten Drehposition an dem Schaftkörper befestigbar ist. Die Formschlusselemente sind also nicht rotationssymmetrisch, sondern geben durch eine geeignete Formbildung eine bestimmte Drehausrichtung vor, in der der Schaftkörper und der Profilkörper für ihre Verbindung zueinander ausgerichtet werden müssen.

Besonders vorteilhaft ist dies, wenn gemäß der Erfindung die bei an dem Schaftkörper befestigtem Profilkörper einander zugewandten Öffnungen von Kühlmittelversorgungsleitung und Kühlmittelzuführleitung in Bezug auf die Längsachsen von Schaftkörper und Profilkörper jeweils außeraxial liegen. Dazu kann es weiter erforderlich sein, dass die in dem Schaftkörper ausgebildete Kühlmittelversorgungsleitung einen ein- oder mehrfach gekrümmten Verlauf besitzt. So wird das Kühlmittel in den Schaftkörper in der Regel im Bereich des Einspannabschnitts koaxial zu der Längsachse des Schaftkörpers aus einer Versorgung zugeführt. Andererseits ragt an dem gegenüberliegenden Ende des Schaftkörpers in der Regel ebenfalls koaxial der Schraubenbolzen zum Befestigen des Profilkörpers an dem Schaftkörper in diesen hinein. Durch das Ausbilden einer gekrümmten Kühlmittelversorgungsleitung kann bei koaxialer Zuführung des Kühlfluids im Bereich des Einspannabschnitts des Schaftkörpers die Schraubverbindung zur Befestigung des Profilkörpers umgangen werden.

Auch die Kühlmittelzuführleitung in dem Profilkörper kann einen ein- oder mehrfachgekrümmten Verlauf besitzen. Erforderlich ist dies aber nicht. Nach einer besonders bevorzugten Ausgestaltung kann die Kühlmittelzuführleitung des Profilkörpers mit mindestens einer innerhalb des Profilkörpers ausgebildeten Kühlmittelringleitung verbunden sein, von der die Kühlmittelverteilleitungen abgehen. Insbesondere kann die Kühlmittelzuführleitung des Profilkörpers mit mindestens zwei innerhalb des Profilkörpers ausgebildeten, in Axialrichtung des Profilkörpers versetzt zueinander angeordneten Kühlmittelringleitungen verbunden sein, wobei von jeder der Ringleitungen mehrere Kühlmittelverteilleitungen abgehen.

Die Kühlmittelzuführleitung kann dann in Bezug auf die Längsachse des Profilkörpers außeraxial von einer Übergabeöffnung im Bereich des Anschlussabschnitts bis zu der Verbindung mit der Ringleitung oder den Ringleitungen verlaufen. Die von den unterschiedlichen, innerhalb des Profilkörpers ausgebildeten Ringleitungen abgehenden Kühlmittelverteilleitungen können jeweils axial zueinander versetzte Austrittsöffnungen am Umfang des Profilkörpers besitzen. Es wird damit eine besonders gleichmäßige Verteilung des Kühlmittels im Bereich der Gewindedrückkanten und der Gewindeschneiden erreicht. Die Ringleitung(en) kann bzw. können (jeweils) einen koaxial zur Längsachse des Profilkörpers ausgerichteten Kreisring bilden. Von diesem können dann in radialer Richtung bzw. unter weitgehend beliebigen Winkeln zur Längsachse des Profilkörpers die Kühlmittelverteilleitungen abgehen.

Insbesondere kann vorgesehen sein, dass die Längsachsen der Austrittsöffnungen einer ersten Gruppe von Kühlmittelverteilleitungen in einem spitzen Winkel zu einer von dem Schaftkörper wegführenden Längsachse des Profilkörpers verlaufen, und dass die Längsachsen der Austrittsöffnungen einer zweiten Gruppe von Kühlmittelverteilleitungen in einem stumpfen Winkel zu einer von dem Schaftkörper wegführenden Längsachse des Profilkörpers verlaufen. Bei dieser Ausgestaltung besitzt eine erste Gruppe von Kühlmittelverteilleitungen Längsachsen im Bereich ihrer Austrittsöffnungen, die unter einem Winkel von weniger als 90° zu der Längsachse des Profilkörpers besitzen, und zwar gesehen in einer Richtung dieser Längsachse von dem Schaftkörper weg. Eine zweite Gruppe von Kühlmittelverteilleitungen besitzt dagegen im Bereich ihrer Austrittsöffnungen eine Längsachse, die unter einem Winkel von mehr als 90° zu der Längsachse des Profilkörpers liegen, wiederum gesehen in einer Richtung von dem Schaftkörper weg. Es ist möglich, dass sämtliche Kühlmittelverteilleitungen entweder der ersten Gruppe oder der zweiten Gruppe angehören. Es wird ein Austritt des Kühlmittels in unterschiedliche Richtungen erreicht, je nach Gruppe von Kühlmittelverteilleitungen. Eine Winkelhalbierende zwischen den Längsachsen der Kühlmittelverteilleitungen der beiden Gruppen kann senkrecht zu der Längsachse des Profilkörpers verlaufen. Durch unterschiedliche Winkel der Austrittsrichtungen der unterschiedlichen Kühlmittelverteilleitungen kann eine besonders gleichmäßige und flexible Ausbringung des Kühlmittels erreicht werden.

Nach einer weiteren Ausgestaltung kann sich der Querschnitt zumindest einiger Kühlmittelverteilleitungen, insbesondere sämtlicher Kühlmittelverteilleitungen, im Bereich ihrer Austrittsöffnungen verjüngen. Die Kühlmittelverteilleitungen können sich beispielsweise konisch verjüngen, insbesondere düsenförmig. Es wird damit eine besonders fokussierte Ausbringung des Kühlmittels erreicht, um beispielsweise im Zuge einer spanenden Bearbeitung erzeugte Späne abzutransportieren.

Es ist jedoch auch möglich, dass sich der Querschnitt zumindest einiger Kühlmittelverteilleitungen, insbesondere sämtlicher Kühlmittelverteilleitungen, im Bereich ihrer Austrittsöffnungen erweitert, beispielsweise konisch erweitert. Die Erweiterung kann zum Beispiel trompetenförmig sein. Es wird somit ein aufgefächertes Ausbringen des Kühlmittels erreicht.

Natürlich ist es auch möglich, dass sich der Querschnitt zumindest einiger, insbesondere sämtlicher Kühlmittelverteilleitungen, im Bereich ihrer Austrittsöffnungen nicht verändert, sondern beispielsweise (kreis-)zylindrisch bleibt.

Im Bereich des Übergangs zwischen der Kühlmittelversorgungsleitung und der Kühlmittelzuführleitung kann mindestens ein Dichtring angeordnet sein. Auf diese Weise wird der Übergang zwischen der Kühlmittelversorgungsleitung und der Kühlmittelzuführleitung sicher abgedichtet. Denkbar ist beispielsweise ein die Übergabeöffnung der Kühlmittelversorgungsleitung oder der Kühlmittelzuführleitung beispielsweise konzentrisch umgebender Dichtring. Denkbar ist aber beispielsweise auch ein (größerer) koaxial zu den Längsachsen von Schaftkörper und Profilkörper angeordneter Dichtring, der auch die Übergabeöffnungen zwischen Kühlmittelversorgungsleitung und Kühlmittelzuführleitung umschließt, jedoch auch im Wesentlichen die Formschlusselemente vollständig umschließen kann. Natürlich ist auch eine Kombination beider genannten Dichtringe möglich, um die Abdichtwirkung weiter zu verbessern.

Zumindest der Profilkörper kann aus einem Hartmetall (HM), einem Schnellarbeitsstahl (HSS) oder einem Keramikwerkstoff bestehen. Weiterhin kann zumindest der Profilkörper mit einer Hartstoffschicht beschichtet sein, vorzugsweise hergestellt in einem CVD-Verfahren oder einem PVD-Verfahren. Als Hartstoffschichten kommen beispielsweise TiN-, TiAlN-, TiCN- oder AlCrN-Schichten in Frage. Die Hartstoffschicht kann nachträglich geglättet werden.

Die Erfindung löst die Aufgabe außerdem durch ein Verfahren zur Herstellung eines erfindungsgemäßen Gewindeformers oder -bohrers, bei dem zumindest der Profilkörper in einem 3D-Druckverfahren hergestellt wird, indem in einer Form Material schichtweise ausgebracht und durch selektives Aufschmelzen oder Sintern des ausgebrachten Materials zumindest der Profilkörper des Gewindeformers oder - bohrers aufgebaut wird.

Das insbesondere pulverförmige Material wird für den 3D-Druck schichtweise in eine Form ausgebracht. Bei dem Material kann es sich insbesondere um einen Metallwerkstoff oder einen Keramikwerkstoff handeln. Das selektive Aufschmelzen oder Sintern des Materials zum Bilden der gewünschten dreidimensionalen Form kann beispielsweise ein selektives Laserschmelzen oder selektives Lasersintern sein. Es erfolgt somit ein schichtweiser Aufbau zumindest des Profilkörpers bzw. Profilkörperrohlings des Gewindeformers oder -bohrers und gegebenenfalls auch des Schaftkörpers.

Im Zuge des 3D-Druckverfahrens kann mindestens ein Dichtring im Bereich des Übergangs zwischen der Kühlmittelversorgungsleitung und der Kühlmittelzuführleitung ausgebildet werden, wie oben erläutert. Dabei kann auch der Dichtring bzw. können auch die Dichtringe in dem 3D-Druckverfahren erzeugt werden. Der Dichtring bzw. die Dichtringe können zum Beispiel aus Kunststoff bestehen. Wie bereits erläutert, kann weiter vorgesehen sein, dass nach dem 3D-Druckverfahren Schneiden oder Drückkanten zum Erzeugen eines Gewindes in einem Werkstück in die Umfangsfläche des Profilkörpers des Gewindeformers oder -bohrers eingearbeitet werden, insbesondere eingeschliffen werden.

Ausführungsbeispiele der Erfindung werden nachfolgend anhand von Zeichnungen erläutert. Es zeigen schematisch:
Fig. 1 einen Teil eines erfindungsgemäßen Gewindeformers in einer Schnittansicht,
Fig. 2 den Schaftkörper des Gewindeformers aus Fig. 1 in einer Schnittansicht,
Fig. 3 den Profilkörperrohling des in Fig. 1 gezeigten Gewindeformers in einer teiltransparenten Seitenansicht,
Fig. 4 den Profilkörperrohling aus Fig. 3 in einer Schnittansicht entlang der Linie 4-4 in Fig. 3,
Fig. 5 das in Fig. 4 bei A gezeigte Detail in einer vergrößerten Ansicht,
Fig. 6 ein weiteres Detail eines Profilkörperrohlings eines erfindungsgemäßen Gewindeformers in einer Schnittansicht,
Fig. 7 ein weiteres Detail eines erfindungsgemäßen Gewindeformers in einer Schnittansicht,
Fig. 8 eine teiltransparente Draufsicht auf den in Fig. 3 gezeigten Profilkörperrohling,
Fig. 9 einen Profilkörperrohling nach einem weiteren Ausführungsbeispiel in einer Schnittansicht,
Fig. 10 einen Profilkörperrohling nach einem weiteren Ausführungsbeispiel in einer Schnittansicht,
Fig. 11 ein Detail eines Profilkörperrohlings nach einem weiteren Ausführungsbeispiel in einer Schnittansicht, und
Fig. 12 einen Profilkörper des erfindungsgemäßen Gewindeformers in einer Seitenansicht.

Soweit nichts anderes angegeben ist, bezeichnen in den Figuren gleiche Bezugszeichen gleiche Gegenstände.

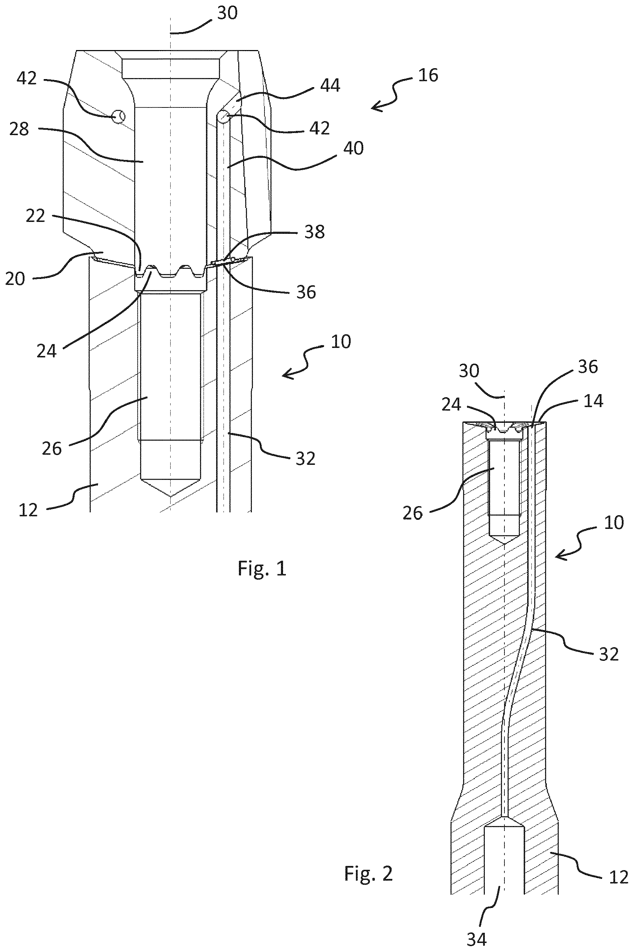

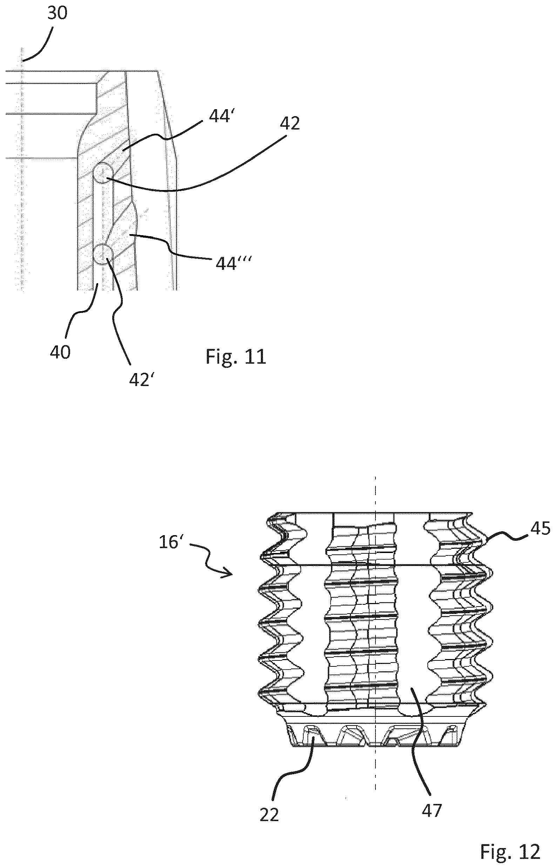

Der in den Figuren gezeigte Gewindeformer umfasst einen Schaftkörper 10, der an seinem einen Ende einen Einspannabschnitt 12 und an seinem anderen Ende einen Halteabschnitt 14 aufweist. Weiterhin umfasst der Gewindeformer einen separat von dem Schaftkörper 10 ausgebildeten Profilkörperrohling 16. Zur Bildung des fertigen Profilkörpers werden in die Umfangsfläche des Profilkörperrohlings 16 noch Gewindedrückkanten oder -schneiden zum Formen oder Schneiden eines Gewindes an einem Werkstück ausgebildet. Dies kann beispielsweise durch Schleifen geschehen. In Fig. 12 ist zur Veranschaulichung ein fertiger Profilkörper 16' gezeigt, an dessen Umfangsfläche Gewindedrückkanten 45 ausgebildet sind. Zwischen den Gewindedrückkanten 45 sind in Axialrichtung verlaufende Schmiernuten 47 vorgesehen. Bei dem in Fig. 12 gezeigten Profilkörper 16' ist das nachfolgend noch näher erläuterte erfindungsgemäße Kühlsystem nicht dargestellt. Es kann ausgebildet sein, wie bei sämtlichen nachfolgend erläuterten Ausführungsbeispielen der Erfindung. Der in Fig. 12 gezeigte Profilkörper 16' kann also anstelle des Profilkörperrohlings 16 in sämtlichen Figuren 1 bis 11 treten. Selbstverständlich sind die erfindungsgemäßen Ausführungsbeispiele auch mit einem Profilkörper mit in die Umfangsfläche eingearbeiteten Gewindeschneiden anstelle von Gewindedrückkanten 45 kombinierbar.

Der in den Figuren gezeigte Profilkörperrohling 16 besitzt einen Anschlussabschnitt 20, mit dem er an dem Halteabschnitt 14 des Schaftkörpers 10 befestigt ist. Dazu weist der Anschlussabschnitt eine Mehrzahl von Formschlusselementen 22 auf, die im zusammengesetzten Zustand mit korrespondierenden Formschlusselementen 24 des Halteabschnitts 14 des Schaftkörpers 10 in Eingriff stehen. Die zueinander korrespondierenden Formschlusselemente 22, 24 sind dabei so ausgebildet, dass der Profilkörperrohling 16 und der Schaftkörper 10 nur in einer eindeutig definierten Drehposition aneinander befestigbar sind, in der die Formschlusselemente 22 und die Formschlusselemente 24 in Eingriff kommen.

Bei dem Bezugszeichen 26 ist eine Bohrung mit Innengewinde des Schaftkörpers 10 zu erkennen. Im miteinander verbundenen Zustand fluchtet diese Bohrung 26 mit einer Bohrung 28 des Profilkörperrohlings 16. Zur Befestigung des Profilkörperrohlings 16 an dem Schaftkörper 10 wird ein Schraubenbolzen durch die Bohrung 28 hindurch in das Innengewinde der Bohrung 26 eingeschraubt, wie dies an sich bekannt ist. Auf diese Weise wird der zylindrische Schaftkörper 10 mit dem ebenfalls eine zylindrische Grundform aufweisenden Profilkörperrohling 16 koaxial verbunden. Die gemeinsame Längsachse ist in Fig. 1 bei dem Bezugszeichen 30 gezeigt.

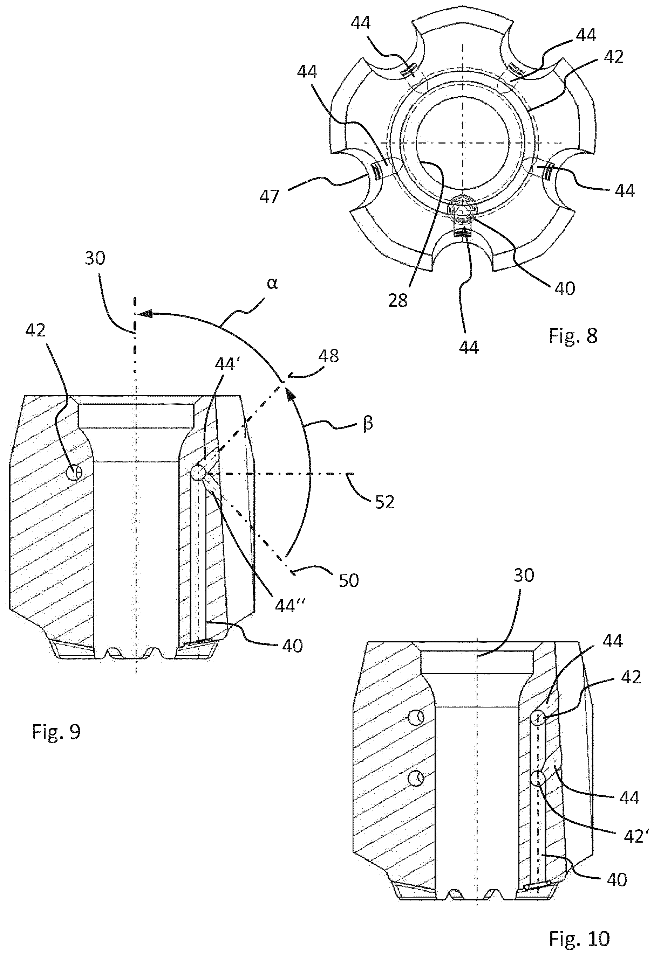

In dem dargestellten Beispiel wurden sowohl der Profilkörperrohling 16 als auch der Schaftkörper 10 in einem 3D-Druckverfahren schichtweise aus einem Metall- oder Keramikwerkstoff aufgebaut. Dabei wurde in dem Schaftkörper 10 eine Kühlmittelversorgungsleitung 32 ausgebildet. Die Kühlmittelversorgungsleitung 32 ist mit einer koaxial zur Längsachse 30 des Schaftkörpers 10 angeordneten Kühlmittelversorgung 34 verbunden und besitzt eine Krümmung, so dass eine Übergabeöffnung 36 der Kühlmittelversorgungsleitung 32 in Bezug auf die Längsachse 30 außeraxial liegt. Im zusammengesetzten Zustand fluchtet diese Übergabeöffnung 36 mit einer korrespondierenden Übergabeöffnung 38 einer innerhalb des Profilkörperrohlings 16 ausgebildeten Kühlmittelzuführleitung 40. Die Kühlmittelzuführleitung 40 mündet bei dem in den Figuren 1 bis 4 dargestellten Ausführungsbeispiel in eine koaxial zur Längsachse 30 des Profilkörperrohlings 16 angeordnete kreisringförmige Ringleitung 42. Von der Ringleitung 42 geht eine Mehrzahl von Kühlmittelverteilleitungen 44 ab, die jeweils eine Austrittsöffnung im Bereich der Gewindedrückkanten oder -schneiden 18 aufweisen. Beispielsweise können die Austrittsöffnungen in den Schmiernuten 47 zwischen benachbarten Gewindedrückkanten 45 austreten. Die Schmiernuten 47 sind auch in Fig. 8 zu erkennen. Zu erkennen ist dabei auch die für die Gewindedrückkanten 45 bereits im Profilkörperrohling 16 vorgegebene Polygonform. In dem gezeigten Beispiel sind fünf Schmiernuten 47 vorgesehen. Die Kühlmittelverteilleitungen 44 können beispielsweise in regelmäßigen Winkelabständen radial nach außen von der Ringleitung 42 abgehen. Wie insbesondere in Figur 8 zu erkennen, besitzt der Profilkörperrohling 16 nach dem gezeigten Ausführungsbeispiel 5 Kühlmittelverteilleitungen 44. Selbstverständlich sind aber auch andere Anzahlen von Kühlmittelverteilleitungen 44 möglich.

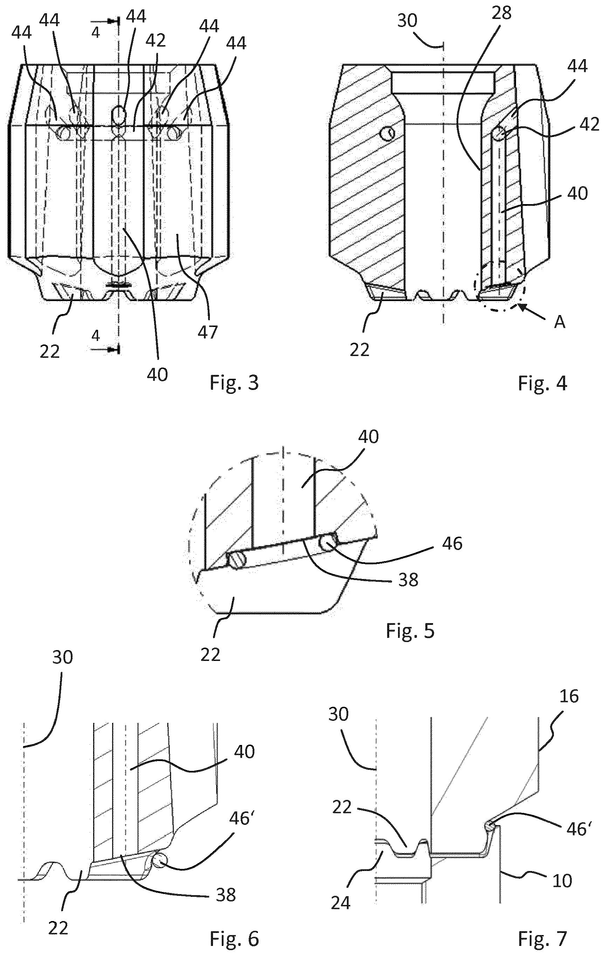

In der vergrößerten Ausschnittsdarstellung der Fig. 5 ist bei dem Bezugszeichen 46 ein beispielsweise ebenfalls in dem 3D-Druckverfahren erzeugter, die Übergabeöffnung 38 der Kühlmittelzuführleitung 40 koaxial umgebender O-ringförmiger Dichtring 46 dargestellt, beispielsweise bestehend aus einem Kunststoffmaterial. Im an dem Schaftkörper 10 befestigten Zustand liegt der Dichtring 46 dichtend an einer zugeordneten Oberfläche des Schaftkörpers 10 an. Die Figuren 6 und 7 zeigen in dieser Hinsicht weitere Ausführungsbeispiele, wobei in Fig. 6 ein wiederum beispielsweise O-ringförmiger Dichtring 46' zu erkennen ist, der koaxial zur Längsachse 30 des Profilkörperrohlings 16 angeordnet ist und im Wesentlichen den gesamtem Anschlussabschnitt 20 mit den Formelementen 22 umgibt. In der Darstellung der Fig. 7 ist zu erkennen, wie ein solcher Dichtring 46' im an dem Schaftkörper 10 befestigten Zustand an einer zugeordneten Dichtfläche des Schaftkörpers 10 anliegt. Es ist auch möglich, dass der Dichtring 46 und der Dichtring 46' in Kombination vorgesehen sind.

Die Figuren 9, 10 und 11 zeigen weitere Ausführungsbeispiele eines erfindungsgemäßen Profilkörperrohlings. Das Ausführungsbeispiel nach Fig. 9 unterscheidet sich von dem Ausführungsbeispiel der Figuren 1 bis 4 lediglich hinsichtlich der Ausbildung der Kühlmittelverteilleitungen. Bei dem Ausführungsbeispiel der Figur 9 gehen von der Ringleitung 42 pro Winkelposition jeweils zwei Kühlmittelverteilleitungen 44' und 44" ab, wobei die Kühlmittelverteilleitungen 44' und 44" unterschiedliche Austrittsrichtungen für das Kühlmittel definieren. Wiederum können in regelmäßigen Winkelabständen jeweils eine Kühlmittelverteilleitung 44' und eine Kühlmittelverteilleitung 44" vorgesehen sein, wie in Fig. 9 gezeigt. Auf diese Weise werden zwei Gruppen von Kühlmittelverteilleitungen gebildet, nämlich eine erste Gruppe mit den Kühlmittelverteilleitungen 44' und eine zweite Gruppe mit den Kühlmittelverteilleitungen 44". Wie in Fig. 9 zu erkennen, stehen die Längsachsen 48 der ersten Gruppe von Kühlmittelverteilleitungen 44' in einem spitzen Winkel α zu der Längsachse 30 des Schaftkörpers 10, gesehen in einer Richtung der Längsachse 30 von dem Schaftkörper 10 weg. Die Längsachsen 50 der zweiten Gruppe von Kühlmittelverteilleitungen 44" stehen unter einem Winkel β zu den Längsachsen 48 der ersten Gruppe von Kühlmittelverteilleitungen 44' und unter einem stumpfen Winkel (α+β) zu der Längsachse 30. Weiter ist in Fig. 9 zu erkennen, dass die Winkelhalbierende 52 zu den Längsachsen 48, 50 senkrecht zur Längsachse 30 verläuft.

Das Ausführungsbeispiel der Fig. 10 unterscheidet sich von dem Ausführungsbeispiel der Figuren 1 bis 4 lediglich dadurch, dass die Kühlmittelzuführleitung 40 zusätzlich zu der Ringleitung 42 mit einer insoweit identisch ausgebildeten, jedoch in Richtung der Längsachse 30 axial versetzt angeordneten zweiten Ringleitung 42' in Verbindung steht, von der ebenfalls Kühlmittelverteilleitungen 44 abgehen, die insoweit identisch zu den von der ersten Ringleitung 42 abgehenden Kühlmittelverteilleitungen 44 ausgebildet sein können, lediglich versetzt in Axialrichtung 30.

In Fig. 9 ist auch zu erkennen, dass sich die Kühlmittelverteilleitungen 44', 44" im Bereich ihrer Austrittsöffnungen düsenförmig konisch verjüngen. Die Kühlmittelverteilleitungen 44, wie in den Figuren 4 und 10 gezeigt, besitzen dagegen einen gleichbleibenden zylindrischen Querschnitt im Bereich ihrer Austrittsöffnungen.

In dem Ausführungsbeispiel der Fig. 11 sind bei dem Bezugszeichen 44''' Kühlmittelverteilleitungen der von dem zweiten Ringkanal 42' angehenden zweiten Gruppe dargestellt, die sich im Bereich ihrer Austrittsöffnung trompetenartig konisch erweitern.

Die zuletzt erläuterten unterschiedlichen Ausführungsbeispiele dienen insbesondere mit Blick auf die Ausgestaltung der Kühlmittelverteilleitungen lediglich zur beispielhaften Veranschaulichung und sollen unterschiedliche Möglichkeiten für die Ausbildung der Kühlmittelverteilleitungen aufzeigen. Es versteht sich, dass die unterschiedlichen Ausgestaltungen der gezeigten Kühlmittelverteilleitungen in beliebiger und insbesondere anderer Weise als in den Figuren gezeigt miteinander kombinierbar sind.

## Patentansprüche

1. Gewindeformer oder -bohrer, umfassend einen Schaftkörper (10), der an seinem einen Ende einen Einspannabschnitt (12) und an seinem anderen Ende einen Halteabschnitt (14) aufweist, weiter umfassend einen separat von dem Schaftkörper (10) ausgebildeten Profilkörper (16') mit Gewindedrückkanten (45) oder Gewindeschneiden zum Formen oder Schneiden eines Gewindes an einem Werkstück, wobei der Profilkörper (16') an seinem einen Ende einen Anschlussabschnitt (20) aufweist, mit dem der Profilkörper (16') an dem Halteabschnitt (14) des Schaftkörpers (10) befestigbar ist, wobei innerhalb des Profilkörpers (16') eine bei an dem Schaftkörper (10) befestigtem Profilkörper (16') mit einer innerhalb des Schaftkörpers (10) ausgebildeten Kühlmittelversorgungsleitung (32) fluchtende Kühlmittelzuführleitung (40) ausgebildet ist, die mit mehreren innerhalb des Profilkörpers (16') ausgebildeten Kühlmittelverteilleitungen (44, 44', 44", 44''') verbunden ist, wobei die Kühlmittelverteilleitungen (44, 44', 44", 44''') jeweils eine Austrittsöffnung im Bereich der Gewindedrückkanten (45) oder Gewindeschneiden besitzen, **dadurch gekennzeichnet, dass** der Profilkörper (16') und der Schaftkörper (10) schichtweise in einem 3D-Druckverfahren aufgebaut worden sind, wobei die bei an dem Schaftkörper (10) befestigtem Profilkörper (16') einander zugewandten Öffnungen (36, 38) von Kühlmittelversorgungsleitung (32) und Kühlmittelzuführleitung (40) in Bezug auf die Längsachsen (30) von Schaftkörper (10) und Profilkörper (16') jeweils außeraxial liegen, und wobei die in dem Schaftkörper (10) ausgebildete Kühlmittelversorgungsleitung (32) einen ein- oder mehrfach gekrümmten Verlauf besitzt.

2. Gewindeformer oder -bohrer nach Anspruch 1, **dadurch gekennzeichnet, dass** der Profilkörper (16') mittels eines axial durch den Profilkörper (16') in den Schaftkörper (10) einschraubbaren Schraubenbolzens an dem Schaftkörper (10) befestigbar ist.

3. Gewindeformer oder -bohrer nach einem der vorhergehenden Ansprüche, **dadurch gekennzeichnet, dass** der Anschlussabschnitt (20) des Profilkörpers (16') Formschlusselemente (22) aufweist, die im an dem Schaftkörper (10) befestigten Zustand in korrespondierende Formschlusselemente (24) des Halteabschnitts (14) des Schaftkörpers (10) derart eingreifen, dass der Profilkörper (16') nur in einer eindeutig definierten Drehposition an dem Schaftkörper (10) befestigbar ist.

4. Gewindeformer oder -bohrer nach einem der vorhergehenden Ansprüche, **dadurch gekennzeichnet, dass** die Kühlmittelzuführleitung (40) des Profilkörpers (16') mit mindestens einer innerhalb des Profilkörpers (16') ausgebildeten Kühlmittelringleitung (42, 42') verbunden ist, von der die Kühlmittelverteilleitungen (44, 44', 44", 44''') abgehen.

5. Gewindeformer oder -bohrer nach Anspruch 4, **dadurch gekennzeichnet, dass** die Kühlmittelzuführleitung (40) des Profilkörpers (16') mit mindestens zwei innerhalb des Profilkörpers (16') ausgebildeten, in Axialrichtung des Profilkörpers (16') versetzt zueinander angeordneten Kühlmittelringleitungen (42, 42') verbunden ist, wobei von jeder der Ringleitungen (42, 42') mehrere Kühlmittelverteilleitungen (44, 44', 44", 44''') abgehen.

6. Gewindeformer oder -bohrer nach einem der vorhergehenden Ansprüche, **dadurch gekennzeichnet, dass** die Längsachsen (48) der Austrittsöffnungen einer ersten Gruppe von Kühlmittelverteilleitungen (44, 44', 44", 44''') in einem spitzen Winkel zu einer von dem Schaftkörper (10) wegführenden Längsachse (30) des Profilkörpers (16') verlaufen, und dass die Längsachsen (50) der Austrittsöffnungen einer zweiten Gruppe von Kühlmittelverteilleitungen (44, 44', 44", 44''') in einem stumpfen Winkel zu einer von dem Schaftkörper (10) wegführenden Längsachse (30) des Profilkörpers (16') verlaufen.

7. Gewindeformer oder -bohrer nach einem der vorhergehenden Ansprüche, **dadurch gekennzeichnet, dass** sich der Querschnitt zumindest einiger Kühlmittelverteilleitungen (44, 44', 44", 44''') im Bereich ihrer Austrittsöffnungen verjüngt.

8. Gewindeformer oder -bohrer nach einem der Ansprüche 1 bis 6, **dadurch gekennzeichnet, dass** sich der Querschnitt zumindest einiger Kühlmittelverteilleitungen (44, 44', 44", 44''') im Bereich ihrer Austrittsöffnungen erweitert.

9. Gewindeformer oder -bohrer nach einem der vorhergehenden Ansprüche, **dadurch gekennzeichnet, dass** im Bereich des Übergangs zwischen der Kühlmittelversorgungsleitung (32) und der Kühlmittelzuführleitung (40) mindestens ein Dichtring (46, 46') angeordnet ist.

10. Gewindeformer oder -bohrer nach einem der vorhergehenden Ansprüche, **dadurch gekennzeichnet, dass** zumindest der Profilkörper (16') aus einem Hartmetall (HM), einem Schnellarbeitsstahl (HSS) oder einem Keramikwerkstoff besteht.

11. Gewindeformer oder -bohrer nach einem der vorhergehenden Ansprüche, **dadurch gekennzeichnet, dass** zumindest der Profilkörper (16') mit einer Hartstoffschicht beschichtet ist, vorzugsweise hergestellt in einem CVD-Verfahren oder einem PVD-Verfahren.

12. Verfahren zur Herstellung eines Gewindeformers oder -bohrers nach einem der vorhergehenden Ansprüche, bei dem zumindest der Profilkörper (16') in einem 3D-Druckverfahren hergestellt wird, indem in einer Form Material schichtweise ausgebracht und durch selektives Aufschmelzen oder Sintern des ausgebrachten Materials zumindest der Profilkörper (16') des Gewindeformers oder -bohrers aufgebaut wird, wobei auch der Schaftkörper (10) des Gewindeformers oder -bohrers in dem 3D-Druckverfahren hergestellt wird.

13. Verfahren nach dem Anspruch 12, **dadurch gekennzeichnet, dass** im Zuge des 3D-Druckverfahrens mindestens ein Dichtring (46, 46') im Bereich des Übergangs zwischen der Kühlmittelversorgungsleitung (32) und der Kühlmittelzuführleitung (40) ausgebildet wird.

14. Verfahren nach einem der Ansprüche 12 oder 13, **dadurch gekennzeichnet, dass** nach dem 3D-Druckverfahren Schneiden oder Drückkanten zum Erzeugen eines Gewindes in einem Werkstück in die Umfangsfläche des Profilkörpers (16') des Gewindeformers oder -bohrers eingearbeitet werden, insbesondere eingeschliffen werden.

## Claims

1. A thread former or drill, comprising a shank body (10), which has a chuck portion (12) at its one end and a retaining portion (14) at its other end, further comprising a profiled body (16') formed separately from the shank body (10) with thread forming edges (45) or thread cutting edges for forming or cutting a thread on a work piece, wherein the profiled body (16') has a connecting portion (20) on its one end, by which the profiled body (16') can be fastened on the retaining portion (14) of the shank body (10),
wherein
when the profiled body (16') is fastened on the shank body (10), a coolant uptake line (40) is formed within the profiled body (16'), aligned with a coolant supply line (32) that is formed within the shank body (10), the coolant uptake line (40) being connected to several coolant distribution lines (44, 44', 44", 44''') formed within the profiled body (16'), wherein the coolant distribution lines (44, 44', 44", 44''') each have an outlet opening in the region of the thread forming edges (45) or thread cutting edges, **characterised in that** the profiled body (16') and the shank body (10) were each formed layer by layer in a 3D-printing process, wherein when the profiled body (16') is fastened on the shank body (10), the openings (36, 38) of the coolant supply line (32) and the coolant uptake line (40) facing each other are off-axis with respect to the longitudinal axes (30) of shank body (10) and profiled body (16'), and wherein the coolant supply line (32) formed in the shank body (10) has a course which is curved once or several times.

2. The thread former or drill according to claim 1, **characterised in that** the profiled body (16') can be fastened on the shank body (10) by way of a screw bolt which can be axially screwed into the shank body (10) passing through the profiled body (16').

3. A thread former or drill according to one of the preceding claims, **characterised in that** the connecting portion (20) of the profiled body (16') has form-fit elements (22) which engage into corresponding form-fit elements (24) of the retaining portion (14) of the shank body (10) in the condition of being fastened on the shank body (10), such that the profiled body (16') can be fastened on the shank body (10) only in an unambiguously defined rotational position.

4. A thread former or drill according to one of the preceding claims, **characterised in that** the coolant uptake line (40) of the profiled body (16') is connected to at least one annular coolant line (42, 42') which is formed inside of the profiled body (16') and from which the coolant distribution lines (44, 44', 44", 44''') go off.

5. The thread former or drill according to claim 4, **characterised in that** the coolant uptake line (40) of the profiled body (16') is connected to at least two annular coolant lines (42, 42') which are formed within the profiled body (16') and are arranged offset from each other in the axial direction of the profiled body (16'), wherein several coolant distribution lines (44, 44', 44", 44''') at a time go off from each of the annular lines (42, 42').

6. A thread former or drill according to one of the preceding claims, **characterised in that** the longitudinal axes (48) of the outlet openings of a first group of coolant distribution lines (44, 44', 44", 44''') run in an acute angle to a longitudinal axe (30) of the profiled body (16') leading away from the shank body (10), and that the longitudinal axes (50) of the outlet openings of a second group of coolant distribution lines (44, 44', 44", 44''') run in an obtuse angle to a longitudinal axe (30) of the profiled body (16') leading away from the shank body (10).

7. A thread former or drill according to one of the preceding claims, **characterised in that** the cross section of at least some of the coolant distribution lines (44, 44', 44", 44''') tapers in the region of their outlet openings.

8. A thread former or drill according to one of the claims 1 to 6, **characterised in that** the cross section of at least some of the coolant distribution lines (44, 44', 44", 44''') enlarges in the region of their outlet openings.

9. A thread former or drill according to one of the preceding claims, **characterised in that** at least one sealing ring (46, 46') is arranged in the region of the transition between the coolant supply line (32) and the coolant uptake line (40).

10. A thread former or drill according to one of the preceding claims, **characterised in that** at least the profiled body (16') consists of a hard metal (HM), a high-speed steel (HSS) or a ceramic material.

11. A thread former or drill according to one of the preceding claims, **characterised in that** at least the profiled body (16') is coated with a layer of a hard material, preferably produced in a CVD-process or a PVD-process.

12. A method for producing a thread former or drill according to one of the preceding claims, wherein at least the profiled body (16') is produced in a 3D-printing process by deploying material layer by layer in a mould, and at least the profiled body (16') of the thread former or drill is built up by selective melting or sintering of the deployed material, wherein even the shank body (10) of the thread former or drill is produced in the 3D-printing process

13. The method according to claim 12, **characterised in that** at least one sealing ring (46, 46') in the region of the transition between the coolant supply line (32) and the coolant uptake line (40) is formed in the course of the 3D-printing process.

14. A method according to one of the claims 12 or 13, **characterised in that** after the 3D-printing process, cutting edges or forming edges for producing a thread in a work piece are incorporated into the circumferential surface of the profiled body (16') of the thread former or drill, in particular by grinding in.

## Revendications

1. Taraud à déformation de matière ou à perçage, comportant un corps de tige (10) qui a une partie de serrage (12) dans l'une extrémité et une partie de maintien (14) dans son autre extrémité, comportant en outre un corps profilé (16') formé séparément du corps de tige (10) et avec des bords coupants ou arêtes de pression (45) pour former ou couper un filet dans une pièce à travailler, le corps profilé (16') ayant une partie de raccordement (20) dans une de ses extrémités, par laquelle le corps profilé (16') peut être accroché sur la partie de maintien (14) du corps de tige (10),
dans lequel
quand le corps profilé (16') est accroché sur le corps de tige (10), un conduit d'apport d'agent réfrigérant (40) est formé en l'espace du corps profilé (16') et aligné avec un conduit d'alimentation d'agent réfrigérant (32) formé en l'espace du corps de tige (10), le conduit d'apport d'agent réfrigérant (40) étant raccordé a plusieurs conduits de distribution d'agent réfrigérant (44, 44', 44", 44''') formés en l'espace du corps profilé (16'), les conduits de distribution d'agent réfrigérant (44, 44', 44", 44''') chacun à la fois ayant un orifice de sortie dans la région des arêtes de pression (45) ou bords coupantes de filet, **caractérisé en ce que** le corps profilé (16') et le corps de tige (10) étaient faites en couches successives par un procédé d'impression 3D, les orifices (36, 38) du conduit d'alimentation d'agent réfrigérant (32) et du conduit d'apport d'agent réfrigérant (40) opposés l'un à l'autre étant désaxés par rapport aux axes longitudinaux (30) du corps de tige (10) et du corps profilé (16') quand le corps profilé (16') est accroché sur le corps de tige (10), le conduit d'alimentation d'agent réfrigérant (32) formé dans le corps de tige (10) ayant un cours qui est courbé une ou plusieurs fois.

2. Taraud à déformation de matière ou à perçage selon la revendication 1, **caractérisé en ce que** le corps profilé (16') peut être accroché sur le corps de tige (10) au travers d'un boulon fileté qui peut être axialement vissé dans le corps de tige (10) à travers le corps profilé (16').

3. Taraud à déformation de matière ou à perçage selon une des revendications précédentes, **caractérisé en ce que** la partie de raccordement (20) du corps profilé (16') a des éléments de liaison par coopération de formes (22) qui s'engagent dans des éléments de liaison par coopération de formes correspondantes (24) de la partie de maintien (14) du corps de tige (10) dans l'état accroché sur le corps de tige (10), de manière que le corps profilé (16') peut être accroché sur le corps de tige (10) seulement dans une position de rotation définie de façon univoque.

4. Taraud à déformation de matière ou à perçage selon une des revendications précédentes, **caractérisé en ce que** le conduit d'apport d'agent réfrigérant (40) du corps profilé (16') est relié à au moins un conduit de réfrigérant annulaire (42, 42') formé en l'espace du corps profilé (16') et duquel sortent les conduits de distribution d'agent réfrigérant (44, 44', 44", 44''').

5. Taraud à déformation de matière ou à perçage selon la revendication 4, **caractérisé en ce que** le conduit d'apport d'agent réfrigérant (40) du corps profilé (16') est relié à au moins deux conduits de réfrigérant annulaires (42, 42') formés en l'espace du corps profilé (16') et arrangés de manière décalée l'un de l'autre dans la direction axiale du corps profilé (16'), plusieurs conduits de distribution d'agent réfrigérant (44, 44', 44", 44''') sortant de chacun des conduits annulaires (42, 42').

6. Taraud à déformation de matière ou à perçage selon une des revendications précédentes, **caractérisé en ce que** les axes longitudinaux (48) des l'orifices de sortie d'un premier groupe de conduits de distribution d'agent réfrigérant (44, 44', 44", 44''') se déroulent en un angle aigu par rapport à un axe longitudinal (30) du corps profilé (16') partant du corps de tige (10), et que les axes longitudinaux (50) des l'orifices de sortie d'un deuxième groupe de conduits de distribution d'agent réfrigérant (44, 44', 44", 44''') se déroulent en un angle obtus par rapport à un axe longitudinal (30) du corps profilé (16') partant du corps de tige (10).

7. Taraud à déformation de matière ou à perçage selon une des revendications précédentes, **caractérisé en ce que** la section transversale d'au moins quelques conduits de distribution d'agent réfrigérant (44, 44', 44", 44''') se rétrécit dans la région de leurs orifices de sortie.

8. Taraud à déformation de matière ou à perçage selon une des revendications 1 à 6, **caractérisé en ce que** la section transversale d'au moins quelques conduits de distribution d'agent réfrigérant (44, 44', 44", 44''') s'élargit dans la région de leurs orifices de sortie.

9. Taraud à déformation de matière ou à perçage selon une des revendications précédentes, **caractérisé en ce qu'**au moins une bague d'étanchéité (46, 46') est arrangée dans la région de la transition entre le conduit d'alimentation d'agent réfrigérant (32) et le conduit d'apport d'agent réfrigérant (40).

10. Taraud à déformation de matière ou à perçage selon une des revendications précédentes, **caractérisé en ce que** au moins le corps profilé (16') consiste d'un métal dur (HM), un acier à coupe rapide (HSS) ou un matériau céramique.

11. Taraud à déformation de matière ou à perçage selon une des revendications précédentes, **caractérisé en ce que** au moins le corps profilé (16') est revêtu d'une couche de matériau dur de préférence produit par un procédé CVD ou un procédé PVD.

12. Procédé de production d'un taraud à déformation de matière ou à perçage selon une des revendications précédentes, dans lequel au moins le corps profilé (16') est produit par un procédé d'impression 3D en déployant du matériau couche par couche dans un moule et au moins le corps profilé (16') du taraud à déformation de matière ou à perçage est construit par fusion ou frittage du matériau déployé, le corps de tige (10) du taraud à déformation de matière ou à perçage étant également produit dans le procédé d'impression 3D.

13. Procédé selon la revendication 12, **caractérisé en ce que** au cours du procédé d'impression 3D, au moins une bague d'étanchéité (46, 46') est formée dans la région de la transition entre le conduit d'alimentation d'agent réfrigérant (32) et le conduit d'apport d'agent réfrigérant (40).

14. Procédé selon une des revendications 12 ou 13, **caractérisé en ce que** après le procédé d'impression 3D, des bords coupants ou arêtes de pression pour produire un filet dans une pièce à travailler sont incorporés dans la surface circonférentielle du corps profilé du taraud à déformation de matière ou à perçage, notamment par affûtage.
